# EUROPÄISCHE PATENTSCHRIFT

(11) **EP 2 169 124 B1**
(45) Veröffentlichungstag und Bekanntmachung des Hinweises auf die Patenterteilung: **31.12.2014**
(21) Anmeldenummer: 09163773.6
(22) Anmeldetag: 25.06.2009
(51) Int. Cl.: E03C 1/05, E03C 1/04, G05D 23/13, F16K 11/078, F16K 11/00

(54) **Elektronisch steuerbare Armatur zum Mischen von kaltem und warmen Wasser, insbesondere für einen Waschtisch**
Electronically controllable fitting for mixing cold and warm water, in particular for a sink
Armature pouvant être commandée électroniquement destinée au mélange d'eau froide et d'eau chaude, notamment pour une table de lavage

(30) Priorität: 24.09.2008 DE 202008012727 U
(43) Veröffentlichungstag der Anmeldung: 31.03.2010
(73) Patentinhaber: VIEGA GmbH & Co. KG, 57439 Attendorn (DE)
(72) Erfinder: Arndt, Johannes, 57368 Lennestadt (DE)
(74) Vertreter: Cohausz & Florack

(56) Entgegenhaltungen:
- EP-A2- 0 457 486
- DE-A1- 3 609 771
- DE-A1-102004 032 773
- US-A- 4 682 728

## Beschreibung

Die Erfindung betrifft eine elektronisch steuerbare Armatur zum Mischen von kalten und warmem Wasser, insbesondere für einen Waschtisch, eine Badewanne oder Dusche, umfassend einen ersten Ventilblock mit einem Ventilkörper zur Mischung von kaltem Wasser und warmem Wasser, einen zweiten Ventilblock mit einen Ventilkörper zur Einstellung eines Wasservolumenstroms, ein erstes elektrisches Stellglied zur Positionierung des Ventilkörpers des ersten Ventilblocks, ein zweites elektrisches Stellglied zur Positionierung des Ventilkörpers des zweiten Ventilblocks, einen Temperatursensor zur Erfassung einer Wasser- oder Mischwassertemperatur, und eine elektronische Steuerung, die das erste elektrische Stellglied in Abhängigkeit der mittels des Temperatursensors erfassten Wasser- oder Mischwassertemperatur und eines vorgebbaren Temperaturwertes ansteuert und die das zweite elektrische Stellglied in Abhängigkeit eines vorgebbaren Wasservolumenstroms ansteuert, wobei die Ventilkörper unabhängig voneinander positionierbar sind.

Aus der DE 100 31 665 B4 ist eine elektronische steuerbare Armatur für eine Sanitärwanne bekannt. Die Armatur ist aus einem Ventilblock gebildet, der Eingänge für Kalt- und Warmwasserströme, zwei Mischwasserausgänge und einen Mischwasserkanal aufweist. In den Eingängen für die Kalt- und Warmwasserströme, in den Mischwasserausgängen sowie im Mischwasserkanal sind Ventilkammern enthalten. In den fünf Ventilkammern sind Drehventile angeordnet, die nach außen weisende Betätigungswellen aufweisen, wobei die Drehventile im Kaltwasser- und Warmwassereingang sowie in den beiden Mischwasserausgängen jeweils paarweise durch Zahnräder mechanisch gekoppelt sind, die auf den Betätigungswellen angeordnet sind und miteinander in Eingriff stehen. Durch die paarweise gekoppelten Drehventile bleibt der Strömungsquerschnitt bei einer Betätigung der Ventile innerhalb ihres Stellbereiches in der Summe annähernd konstant. An der Außerseite des Ventilblocks sind drei Stellmotoren zur Betätigung der Drehventile befestigt, die an einer Steuereinrichtung angeschlossen sind. Die Steuereinrichtung weist eine elektronische Steuerung mit Schnittstellen zum Anschluss eines Datenein- und Ausgabegerätes, eines Temperaturfühlers und einer Einrichtung zur Erfassung der Wannenfüllung auf, wobei der Temperaturfühler in dem Mischwasserkanal angeordnet ist.

Diese bekannte Armatur ist aus einer relativ hohen Anzahl von Einzelteilen aufgebaut, was zu entsprechend hohen Materialkosten führt.

Aus der US 4,682,728 ist eine Vorrichtung zur Steuerung der Temperatur und Durchflussrate von Mischwasser bekannt, die einen Ventilkörper zur Regelung der Temperatur sowie einen Ventilkörper zur Regelung der Volumenrate des Mischwassers aufweist, wobei die Ventile mittels Schrittmotoren betätigt werden, die ihrerseits von einer Steuereinheit gesteuert werden. An die Steuereinheit sind Temperatursensoren zur Messung der Mischwassertemperatur sowie eine Eingabevorrichtung angeschlossen. Die Volumenrate und die Temperatur des Mischwassers werden automatisch von der Steuereinheit nach Benutzervorgaben eingestellt.

Die DE 10 2004 032 773 A1 offenbart eine manuell bedienbare Sanitärarmatur, die ein Mischventil und ein Mengenregulierventil umfasst, die jeweils mit einem Stellgriff versehen sind, wobei der dem Mengenregulierventil zugeordnete Stellgriff dabei koaxial zu dem Stellgriff des Mischventils angeordnet ist. Zur Kraftübertragung ist zwischen dem Mengenregulierventil und dem zugehörigen Stellgriff ein Zahnradgetriebe oder ein Zahnriemengetriebe vorgesehen.

Weiter ist aus dem Stand der Technik (EP 0 457 486 A2) eine Vorrichtung zur Steuerung der Temperatur und Durchflussrate von Mischwasser bekannt, die zwei parallel angeordnete Ventile beinhaltet, die an einer Kaltwasser- bzw. Heißwasserleitung angeschlossen sind und jeweils mittels Schrittmotoren betätigt werden. Nachdem das Kaltwasser und das Heißwasser in einer Mischkammer zusammengeführt worden sind, wird das Mischwasser ausgegeben.

Schließlich zeigt die DE 36 09 771 A1 ein manuell bedienbares Mengenregulierventil für Sanitärarmaturen mit einem thermostatgeregeltem Mischventil und einem Mengenregulierventil, wobei als Ventilkörper zwei Regelscheiben mit ringsegmentförmig ausgebildeten Auslassöffnungen vorgesehen sind.

Der vorliegenden Erfindung liegt die Aufgabe zugrunde, eine Armatur der eingangs genannten Art zu schaffen, die eine dezentrale, elektronische Freigabe von Trinkwasser mit Temperatur- und Volumenstromregelung, insbesondere eine automatische Regelung des Volumenstroms ermöglicht, sich durch eine konstruktiv einfache, gut zugängliche Anordnung von Sensoren auszeichnet, und sich kostengünstig herstellen lässt.

Zur Lösung dieser Aufgabe wird eine Armatur mit den Merkmalen des Anspruchs 1 vorgeschlagen.

Die erfindungsgemäße Armatur ist dadurch gekennzeichnet, dass zwischen den beiden Ventilblöcken ein Verbindungskanal angeordnet ist, der mit einem Durchflussmengenmesser versehen ist, wobei der Verbindungskanal durch ein Rohrstück gebildet ist und die beiden Ventilblöcke jeweils eine stufenförmig ausgebildete Bohrung aufweisen, in welche das Rohrstück eingesteckt ist, und wobei die Ventilkörper als Drehventilkörper ausgebildet sind und jeweils zwei im Wesentlichen parallel zueinander verlaufende Bohrungen aufweisen, die im Wesentlichen parallel zur Drehachse des jeweiligen Drehventilkörpers verlaufen und in einen quer zur Drehachse verlaufenden Abgangskanal des Ventilkörper münden.

Die erfindungsgemäße Armatur benötigt im Gegensatz zu der aus der DE 100 31 665 B4 bekannten Armatur mit fünf Drehventilen lediglich zwei Ventilkörper, die vorzugsweise ebenfalls als Drehventile ausgebildet sind. Die erfindungsgemäße Armatur zeichnet sich somit durch vergleichsweise geringe Materialkosten aus.

Eine vorteilhafte Ausgestaltung der erfindungsgemäßen Armatur ist dadurch gekennzeichnet, dass ihre beiden Ventilblöcke baugleich ausgebildet sind. Diese Bauweise bzw. erfindungsgemäße Konstruktion ermöglicht eine besonders effektive Herstellung einer gattungsgemäßen Mischarmatur.

Die Ventilkörper der erfindungsgemäßen Armatur sind vorzugsweise unterschiedlich ausgebildet. Der Ventilkörper des ersten Ventilblocks verfügt vorzugsweise über keramische Scheiben, die getrennte Einlässe für Kalt- und Warmwasser aufweisen. Der Ventilkörper ermöglicht die Erzeugung eines Mischwasserstroms mit vorgebbarer Wassertemperatur. Der Ventilkörper des zweiten Ventilblocks ist vorzugsweise so ausgeführt, dass er eine Einstellung eines Wasservolumenstroms, aber auch eine Umschaltung von einer Wasserentnahmestelle auf eine andere Wasserentnahmestelle, z.B. von einem Wanneneinlauf auf eine Handbrause und umgekehrt, ermöglicht.

Erfindungsgemäß ist zwischen den beiden Ventilblöcken ein Verbindungskanal angeordnet, der mit einem Durchflussmengenmesser versehen ist. Der Verbindungskanal ist dabei durch ein Rohrstück gebildet, wobei die beiden Ventilblöcke jeweils eine stufenförmig ausgebildete Bohrung aufweisen, in welche das Rohrstück eingesteckt ist. Das Rohrstück gestattet eine konstruktiv einfache, gut zugängliche Anordnung des Durchflussmengenmessers, bei dem es sich vorzugsweise um einen elektronischen Volumenstromzähler handelt.

Eine weitere vorteilhafte Ausgestaltung der erfindungsgemäßen Armatur besteht darin, dass der Temperatursensor durch einen Wandbereich des zweiten Ventilblocks vom fließenden Mischwasser getrennt ist. So werden Messfehler ausgeschlossen, die andernfalls bei einer allmählichen Verkalkung oder Verschmutzung der Oberfläche des Temperatursensors auftreten würden. Der Wandbereich bzw. die Abtrennung zwischen Temperatursensor und Mischwasser kann dabei relativ dünnwandig ausgebildet sein, um eine hohe Genauigkeit der Temperaturmessung sicher zu stellen. Die Wanddicke des dünnwandigen Bereichs ist so bemessen, dass dieser Bereich den geforderten Druckverhältnissen in dem Trinkwasserleitungssystem, in welchem die Armatur (Mischeinheit) zum Einsatz kommt, mit ausreichender Sicherheit standhält. Durch die Anordnung des Temperatursensors in dem zweiten Ventilblock ist sichergestellt, dass die Temperatur des formierten Mischwasserstroms an einer Stelle erfasst wird, an der ein im Wesentlichen stabiler Mischwasserstrom und damit eine entsprechend stabile Mischtemperatur vorliegt.

Die elektrischen Stellglieder der erfindungsgemäßen Armatur bestehen wie bei der aus der DE 100 31 665 B4 bekannten Armatur vorzugsweise aus Stellmotoren. Ebenso sind die Stellmotoren und die Ventilkörper der erfindungsgemäßen Armatur vorzugsweise mit Zahnrädern versehen. Gemäß einer vorteilhaften Ausgestaltung ist bei der erfindungsgemäßen Armatur jedoch vorgesehen, dass das mit dem jeweiligen Ventilkörper verbundene Zahnrad über einen Zahnriemen mit dem Zahnrad des Stellmotors verbunden ist. Die Verwendung eines flexiblen, in gewissen Grenzen elastischen Zahnriemens ermöglicht in vorteilhafter Weise die Kompensation von Fertigungstoleranzen bezüglich des Abstandes zwischen dem Ventilblock und dem ihm zugeordneten Stellmotor und auch bezüglich der gegenseitigen Ausrichtung dieser Komponenten zueinander.

Der Ventilkörper und/oder der ihn umgebende Ventilblock ist vorzugsweise mit einem Sensor zur Erfassung der Position (Drehstellung) des Ventilkörpers relativ zum Ventilblock versehen. Der Sensor sendet ein der erfassten Ventilkörperposition proportionales Signal an die elektronische Steuerung. Auf diese Weise wird die Position (Drehstellung) des Ventilkörpers überwacht. Alternativ kann diese Überwachung auch über die Inkremente des jeweiligen Stellmotors bzw. Schrittmotors erfolgen. Vorzugsweise umfasst die erfindungsgemäße Armatur eine Vorrichtung zur Endlagenüberwachung der Stellglieder bzw. Schrittmotoren. Die Vorrichtung zur Endlagenüberwachung kann zum Beispiel mindestens einen Hall-Generator aufweisen. Dieser zählt durch eine separate Einrichtung die durch die Drehung der Schrittmotoren erzeugten Impulse und erfasst dabei zugleich die Drehrichtung. Anhand der Anzahl der gezählten Impulse und der dabei gegebenenfalls erfassten Drehrichtung kann die jeweilige Position des Ventilkörpers zuverlässig ermittelt werden.

Die elektronische Steuerung ist dabei mit einer Elektronik versehen, die softwarebasiert die Position des Ventilkörpers erfasst, indem sie die Anzahl der ausgegebenen Inkremente (Richtung und Schrittweite) auswertet.

Die erfindungsgemäße Armatur zeichnet sich zudem durch besonders günstige Montageverhältnisse aus, wenn gemäß einer weiteren bevorzugten Ausgestaltung der erste Ventilblock ein erstes und zweites Bohrungspaar zum Anschluss einer Warmwasserleitung und einer Kaltwasserleitung aufweist, wobei die Längsmittelachsen des ersten Bohrungspaares im Wesentlichen parallel zur Längsmittelachse des in dem Ventilblock aufgenommenen Ventilkörpers verlaufen, während die Längsmittelachsen des zweiten Bohrungspaares quer zur Längsmittelachse des Ventilkörpers verlaufen. Da der erste Ventilblock und der zweite Ventilblock vorzugsweise identisch ausgebildet sind, weist dann dementsprechend der zweite Ventilblock ein erstes und zweites Bohrungspaar zum Anschluss einer ersten Wasserabgangsleitung und einer zweiten Wasserabgangsleitung auf, wobei die Längsmittelachsen des ersten Bohrungspaares im Wesentlichen parallel zur Längsmittelachse des in dem Ventilblock aufgenommenen Ventilkörpers verlaufen, während die Längsmittelachsen des zweiten Bohrungspaares quer zur Längsmittelachse des Ventilkörpers verlaufen. Die nicht benötigten Eingänge bzw. Abgänge können durch Schraubstopfen flüssigkeitsdicht verschlossen werden.

Weitere bevorzugte und vorteilhafte Ausgestaltungen der erfindungsgemäßen Armatur sind in den Unteransprüchen angegeben.

Nachfolgend wird die Erfindung anhand einer mehrere Ausführungsbeispiele darstellenden Zeichnung näher erläutert. Es zeigen:
- Fig. 1: eine erfindungsgemäße Armatur zum Mischen von kaltem und warmem Wasser, in perspektivischer Darstellung;
- Fig. 2: eine Draufsicht auf die Armatur der Fig. 1;
- Fig. 3: eine Seitenansicht der Armatur der Fig. 1;
- Fig. 4: eine Schnittansicht der Armatur entlang der Schnittlinie A-A der Fig. 2;
- Fig. 5: eine Schnittansicht der Armatur entlang der Schnittlinie B-B der Fig. 3.
- Fig. 6: eine erfindungsgemäße Armatur zum Mischen von kaltem und warmem Wasser, in perspektivischer Darstellung;
- Fig. 7: eine Draufsicht auf die Armatur der Fig. 6;
- Fig. 8: eine Seitenansicht der Armatur der Fig. 6;
- Fig. 9: eine Schnittansicht der Armatur entlang der Schnittlinie A-A der Fig. 7; und
- Fig. 10: eine Schnittansicht der Armatur entlang der Schnittlinie C-C der Fig. 8.

Die in der Zeichnung dargestellte Armatur 1 bzw. 1' ist eine elektronisch steuerbare Mischeinheit zum Mischen von Kalt- und Warmwasser sowie zum Einstellen eines Mischwasservolumens bzw. Mischwasservolumenstromes. Die Armatur 1, 1' ist beispielsweise für eine Kombination mit einem Waschtisch, einer Sanitärwanne mit Handbrause und/oder einer Dusche bestimmt und kann dezentral angeordnet werden.

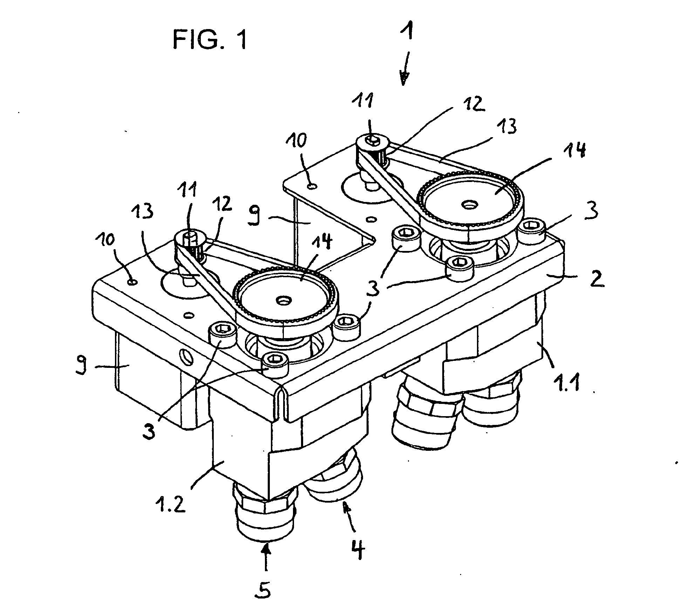

Die Armatur 1 umfasst zwei Ventilblöcke (Funktionsblöcke) 1.1, 1.2, die miteinander über eine Halterung 2 und Schraubbolzen 3 verbunden sind. Die Halterung 2 besteht in dem in den Fig. 1 dargestellten Ausführungsbeispiel aus einem einstückigen Blechformteil.

Der Ventilblock 1.1 dient der Mischung von Kalt- und Warmwasser, während der Ventilblock 1.2 der Einstellung des Mischwasservolumenstroms bzw. der Verteilung des Mischwasservolumenstroms auf zwei Wasserabgänge (Wasserausgänge) 4, 5 dient. An die beiden Wasserabgänge 4, 5 können beispielsweise eine Wannenzulaufarmatur und eine Handbrause angeschlossen werden.

Die Ventilblöcke 1.1 und 1.2 sind baugleich, d.h. identisch ausgebildet. Sie weisen jeweils eine stufenförmig ausgebildete Bohrung 6 auf, in der ein Ventilkörper 7.1, 7.2 drehbar aufgenommen ist. Die Ventilblöcke 1.1, 1.2 sind aus Kunststoff oder Metall, vorzugsweise aus Messing gefertigt. Die Ventilkörper (Drehventilkörper) 7.1, 7.2 sind dagegen vorzugsweise aus Keramik oder aus mit Keramikscheiben versehenen Metall- oder Kunststoffkartuschen hergestellt. Sie sind mit nach außen geführten Betätigungswellen 8 versehen und können unabhängig voneinander gedreht werden.

An jedem der beiden Ventilblöcke 1.1, 1.2 ist ein elektrisches Stellglied 9 zur Positionierung (Drehung) des zugehörigen Ventilkörpers 7.1, 7.2 angebaut. Das Stellglied 9 besteht aus einem Stellmotor (Schrittmotor), der über die Halterung 2 und Schrauben 10 an dem Ventilblock 1.1, 1.2 befestigt ist. Auf der Antriebswelle 11 des Stellmotors 9 sitzt ein Zahnrad 12, das über einen Zahnriemen 13 und ein auf der Betätigungswelle 8 sitzendes Zahnrad 14 den Ventilkörper 7.1, 7.2 dreht und somit dessen Position relativ zum Ventilblock 1.1, 1.2 verstellt.

Die Halterung enthält Durchbrüche 2.1, 2.2, die jeweils einen kreiszylindrischen, durchmesserverringerten Kopfabschnitt des Ventilkörpers 7.1, 7.2 mit geringem Spiel umgeben. Der jeweilige Durchbruch 2.1, 2.2 ist durch einen ringförmigen, in die Ventilkörperaufnahmebohrung 6 des Ventilblocks 1.1, 1.2 hinragenden Kragen 2.3 definiert. Die nach innen umgebogene Stirnseite des Kragens 2.3 definiert eine Anschlagfläche, durch die die axiale Lage des drehbaren Ventilkörpers 7.1, 7.2 in der jeweiligen Ventilkörperaufnahmebohrung 6 festgelegt ist.

Der drehbare Ventilkörper 7.1, 7.2 weist zwei Einlässe oder Bohrungen 7.3, 7.4; 7.5, 7.6 auf, die im Wesentlichen parallel zur Drehachse des Ventilkörpers 7.1, 7.2 verlaufen und in einen quer zur Drehachse verlaufenden Abgangskanal (Durchbruch) 7.7 des Ventilkörpers münden. Die beiden Einlässe (Bohrungen) 7.3 und 7.4 bzw. 7.5 und 7.6 haben den gleichen Durchmesser.

Den Bohrungen 7.3, 7.4 bzw. 7.5, 7.6 des jeweiligen Ventilköpers 7.1, 7.2 sind im Ventilblock 1.1, 1.2 ausgebildete Zulaufbohrungen 15, 16 bzw. Abgangsbohrungen 17, 18 zugeordnet.

Die Zulaufbohrungen 15, 16 umfassen mit Innengewinde versehene Anschlussbohrungen 15.2, 16.2, in die mit entsprechenden Außengewinde versehene Anschlusselemente 19 eingeschraubt sind, sowie Einlassbohrungen 15.1, 16.1 (ohne Gewinde). Der Durchmesser der Einlassbohrung 15.1, 16.1 entspricht dem Durchmesser der jeweiligen Bohrung 7.3, 7.4 des Ventilkörpers 7.1. Der Durchmesser der jeweiligen Anschlussbohrung 15.2, 16.2 ist dagegen deutlich größer als der Durchmesser der Einlassbohrung 15.1, 16.1, wobei die Längsmittelachse der Anschlussbohrung 15.2, 16.2 gegenüber der Längsmittelachse der Einlassbohrung 15.1, 16.1 radial versetzt bzw. abgewinkelt verläuft.

In Höhe des quer zur Drehachse verlaufenden Durchbruchs 7.7 des Ventilkörpers 7.1, 7.2 weist die Ventilaufnahmebohrung 6 des Ventilblockes 1.1, 1.2 eine ringförmige Erweiterung 6.1 auf.

Zwischen den beiden Ventilblöcken 1.1, 1.2 ist ein Verbindungskanal 20 angeordnet, der mit einem Durchflussmengenmesser (Volumenstrommesser) 21 versehen ist. Der Verbindungskanal 20 ist durch ein Rohrstück 22 gebildet und dient als Mischkanal für das zusammengeführte Kalt- und Warmwasser. Der Durchflussmengenmesser 21 ragt radial in den Verbindungskanal (Mischkanal) 20 hinein und steht gegenüber dem Außenumfang des Rohrstückes 22 vor.

Der jeweilige Ventilblock 1.1, 1.2 hat eine quer zur Drehachse des Ventilkörpers 7.1, 7.2 verlaufende Bohrung 23, die stufenförmig ausgebildet ist und sich als Durchgang von der den Ventilkörper 7.1, 7.2 aufnehmenden Bohrung 6 nach außen erstreckt. Die Bohrung 23 liegt im Bereich der radialen, ringförmigen Erweiterung 6.1 der Ventilkörperaufnahmebohrung 6.

Die Enden des Rohrstückes 22 sind in den durchmessererweiterten Axialabschnitt der Querbohrungen 23 eingesteckt. Die Enden des Rohrstückes 22 sind dabei am Außenumfang mit Ringnuten 24 versehen, die der Aufnahme von Dichtungsringen (nicht gezeigt) dienen.

Der Durchflussmengenmesser 21 ist an einer elektronischen Steuerung bzw. Schaltung (nicht gezeigt) angeschlossen, die den Wert des Durchflussvolumens bzw. Volumenstroms errechnet und mittels des Stellmotors 9 die Drehstellung des Ventilkörpers 7.2 im zweiten Ventilblock 1.2 in Abhängigkeit eines vorgegebenen Volumenstrom-Sollwertes regelt. Zur Vorgabe eines Volumenstrom-Sollwertes ist die elektronische Steuerung mit einer elektronischen Fernbedienung (nicht gezeigt) ausgestattet. Die Fernbedienung kann dabei fest an dem betreffenden Sanitärgegenstand, z.B. einem Waschtisch oder einer Badewanne angebracht sein, wobei in diesem Fall sowohl eine drahtgebundene als auch eine drahtlose Signalübertragung möglich ist, oder als mobile Fernbedienung zur drahtlosen Signalübertragung ausgebildet sein.

Über die Fernbedienung kann ferner ein Sollwert für die Wassertemperatur vorgegeben werden.

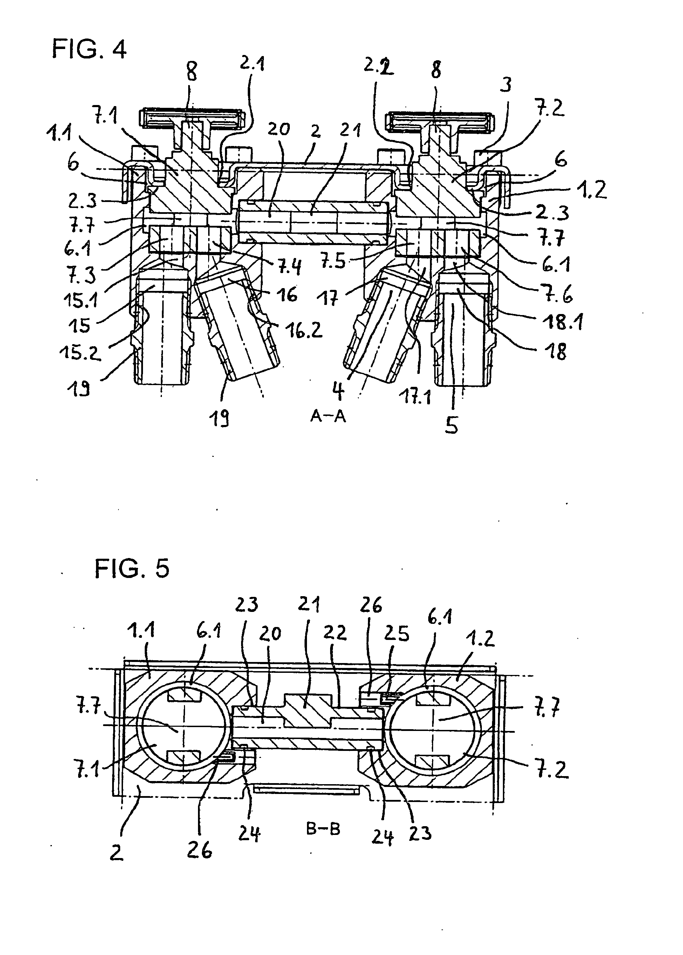

Zur Erfassung des Istwertes der Wasser- bzw. Mischwassertemperatur ist die erfindungsgemäße Mischeinheit 1 mit einem Temperatursensor 25 ausgerüstet, der in der Mischwasserströmungsrichtung gesehen hinter dem Durchflussmengenmesser 21 angeordnet ist (vgl. Fig. 5), und zwar ist der Temperatursensor 25 in einer im Ventilblock 1.2 ausgebildeten Bohrung 26 angeordnet. Die Bohrung 26 verläuft parallel zu der Querbohrung 23, in die das Ende des Rohrstückes 22 eingesteckt ist. Der Temperatursensor 25 ist durch einen dünnwandigen Bereich des zweiten Ventilblocks 1.2 vom fließenden Mischwasser getrennt.

Beim Betrieb der erfindungsgemäßen Armatur 1 fließt das Kalt- und/oder Warmwasser über die beiden Zuläufe (Eingänge) 15, 16 des ersten Ventilblocks 1.1 von unten in dessen Ventilkörper 7.1, wobei gegebenenfalls die Position für die gewünschte Wassertemperatur angefahren wird. Das Wasser bzw. Mischwasser fließt dann oben aus dem Ventilkörper 7.1 über den Durchbruch 7.7 in Richtung des zweiten Ventilblocks 1.2. Dort fließt das Wasser bzw. Mischwasser von oben in den Ventilkörper 7.2, wobei der gewünschte Volumenstrom entweder für die eine oder andere Entnahmestelle (z.B. Wannenzulaufarmatur oder Handbrause) freigegeben wird. Das Wasser bzw. Mischwasser fließt schließlich mit dem gewünschten Volumenstrom nach unten aus dem Ventilkörper 7.2 heraus.

Die erfindungsgemäße Armatur 1 ist vorzugsweise so ausgestaltet, dass sich der Ventilkörper 7.1 des ersten Ventilblockes 1.1 im stromlosen Zustand des zugeordneten Stellmotors (Schrittmotors) 9 stets in einer Ausgangsstellung befindet, in der der Kaltwassereinlass des Ventilblocks 1.1 mit einer der beiden Bohrungen 7.3 oder 7.4 des Ventilkörpers 7.1 fluchtet, d.h. in hydraulisch verbunden ist. Hierdurch wird eine Querströmung vom Kaltwassereinlass zum Warmwassereinlass verhindert. Durch entsprechende Ansteuerung des Stellmotors 9 wird der Ventilkörper 7.1 aus der Ausgangsstellung in eine Richtung gedreht, in der die andere der beiden Bohrungen 7.3 bzw. 7.4 des Ventilkörpers 7.1 mit dem Warmwassereinlass des Ventilblocks 1.1 hydraulisch verbunden wird. Der Ventilkörper 7.1 kann dabei soweit gedreht werden, dass nur noch der Warmwasseranschluss mit der ihm zugeordneten Bohrung (z.B. 7.3) des Ventilkörpers 7.1 verbunden und die hydraulische Verbindung zwischen dem Kaltwasseranschluss und der ihm zugeordneten Bohrung (z.B. 7.4) des Ventilkörpers 7.1 getrennt ist.

Der Ventilkörper 7.2 des zweiten Ventilblockes 1.2 befindet sich im stromlosen Zustand des ihm zugeordneten Stellmotors (Schrittmotors) 9 stets in einer Mittelstellung, in der er beide Abgangsbohrungen bzw. Auslässe 17, 18 des zweiten Ventilblockes 1.2 verschließt. Durch entsprechende Ansteuerung des Stellmotors 9 wird der Ventilkörper 7.2 aus der Mittelstellung in die eine oder andere Richtung gedreht. Bei Drehung in die eine Richtung wird die Wasserstrecke zu einer ersten Wasserentnahmestelle, z.B. einem Badewanneneinlauf freigegeben. Der Wasservolumenstrom zu der ersten Wasserentnahmestelle ist hierbei von Null bis zu einem Maximum einstell- bzw. regelbar. Bei Drehung in die andere Richtung wird die Wasserstrecke zu einer zweiten Wasserentnahmestelle, z.B. einer Handbrause freigegeben. Der Wasservolumenstrom zu der zweiten Wasserentnahmestelle ist hierbei ebenfalls von Null bis zu einem Maximum einstell- bzw. regelbar.

Die Ausgangsstellung bzw. Mittelstellung des Ventilkörpers 7.1 bzw. 7.2 kann durch die elektronische Steuerung überwacht werden, da diese den jeweiligen Stellmotor (Schrittmotor) 9 mit Hilfe von Inkrementen steuert. Anhand der Anzahl von Schritten ist die relative Stellung des Schrittmotors 9 bezüglich des zugehörigen Ventilblocks 1.1 bzw. 1.2 bekannt. Die Startbedingungen sind stets so, dass der Ventilkörper 7.1 auf "ganz kalt" und der Ventilkörper 7.2 auf "geschlossen" eingestellt ist. In dieser Ausgangsstellung bzw. Mittelstellung wird vorzugsweise eine Rückstellung (reset) des Inkrementspeichers der elektronischen Steuerung durchgeführt, damit eventuell aufgetretene Schrittfehler oder verloren gegangene oder nicht erfasste Schritte (Inkremente) kompensiert werden.

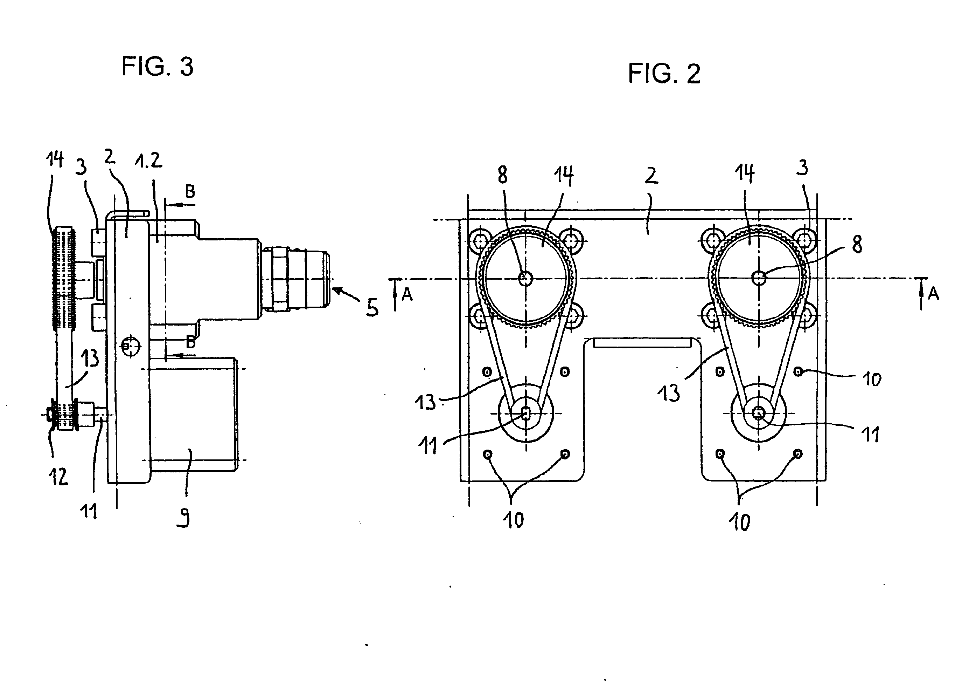

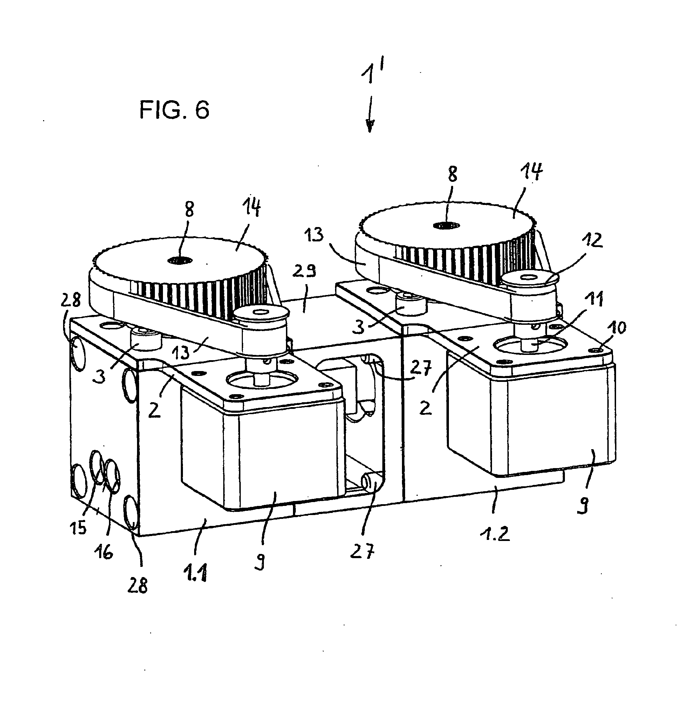

In den Figuren 6 bis 10 ist ein weiteres Ausführungsbeispiel einer erfindungsgemäßen elektronisch steuerbaren Armatur 1' zum Mischen von Kalt- und Warmwasser sowie zum Einstellen eines Mischwasservolumenstromes dargestellt. Dieses Ausführungsbeispiel entspricht in vielen Details dem in den Figuren 1 bis 5 dargestellten Ausführungsbeispiel.
Ähnlich Komponenten der Armaturen 1 und 1' sind daher mit den gleichen Bezugszeichen versehen.

Die Armatur 1' umfasst wiederum zwei Ventilblöcke (Funktionsblöcke) 1.1, 1.2, wobei der Ventilblock 1.1 der Mischung von Kalt- und Warmwasser dient, während der Ventilblock 1.2 der Einstellung des Mischwasservolumenstroms bzw. der Verteilung des Mischwasservolumenstroms auf zwei Mischwasserabgänge (Mischwasserausgänge) dient.

Die Ventilblöcke 1.1, 1.2 sind miteinander durch Schraubbolzen (Innensechskantschrauben) verbunden, wobei die Schaubbolzen 27 sind in Durchgangsbohrungen 28 aufgenommen, die jeweils einen durchmessererweiterten Anfangsabschnitt zur formschlüssigen Aufnahme des Schaubbolzenkopfes aufweisen. Zwischen den Ventilblöcken 1.1, 1.2 ist ein Abstandselement 29 angeordnet, das in seinen den Ventilblöcken 1.1, 1.2 zugewandten Seiten den Schraubbolzen 27 zugeordnete Gewindebohrungen 30 aufweist. Das Abstandselement 29 ist als quaderförmiger Hohlkörper ausgebildet, wobei insbesondere in seinen den Ventilblöcken 1.1, 1.2 zugewandten Wandabschnitten jeweils ein Durchbruch 29.1, 29.2 ausgebildet ist.

Die Ventilblöcke 1.1, 1.2 sind ebenfalls einheitlich ausgeführt. Sie weisen jeweils eine stufenförmige Bohrung 6 auf, in der ein Ventilkörper 7.1, 7.2 drehbar aufgenommen ist. Die baugleichen Ventilblöcke 1.1, 1.2 sind aus Kunststoff oder Metall gefertigt, während die Ventilkörper 7.1, 7.2 vorzugsweise aus Keramik hergestellt sind. Die Ventilkörper 7.1, 7.2 weisen nach außen geführte Betätigungswellen 8 auf und können unabhängig voneinander gedreht werden.

An jedem der beiden Ventilblöcke 1.1, 1.2 ist ein elektrisches Stellglied 9 zur Positionierung (Drehung) des jeweiligen Ventilkörpers 7.1, 7.2 montiert. Das Stellglied besteht aus einem Stellmotor (Schrittmotor) 9, der über eine Halterung 2 und Schrauben 3, 10 an dem jeweiligen Ventilblock befestigt ist. Auf der Antriebswelle 11 des Schrittmotors 9 sitzt ein Zahnrad 12, das über einen Zahnriemen 13 und ein auf der Betätigungswelle 8 sitzendes Zahnrad 14 den Ventilkörper 7.1 bzw. 7.2 dreht und somit dessen Position relativ zum Ventilblock 1.1, 1.2 verstellt.

Der drehbare Ventilkörper 7.1, 7.2 weist jeweils zwei im Wesentlichen parallel zueinander verlaufende Bohrungen 7.3, 7.4; bzw. 7.5, 7.6 auf, die im Wesentlichen parallel zur Drehachse des Ventilkörpers 7.1, 7.2 verlaufen und in einen quer zur Drehachse verlaufenden Abgangskanal (Durchbruch) 7.7 des Ventilkörpers münden. Die Bohrungen 7.3 und 7.4 bzw. 7.5 und 7.6 haben den gleichen Durchmesser.

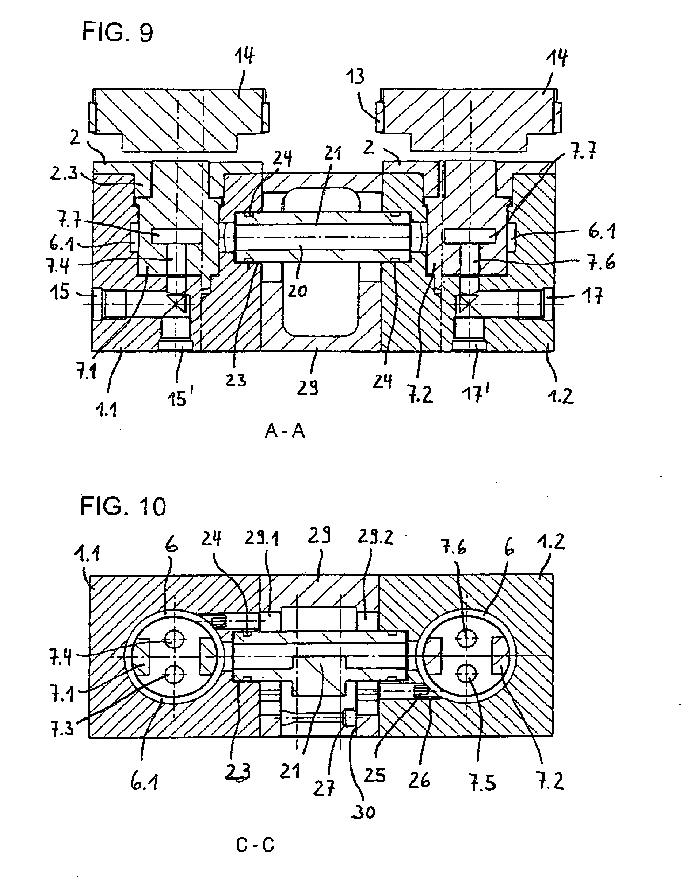

Den Bohrungen 7.3, 7.4; bzw. 7.5, 7.6 des Ventilköpers 7.1, 7.2 sind im Ventilblock 1.1, 1.2 ausgebildete Zulaufbohrungen 15, 16; 15' bzw. Abgangsbohrungen 17, 18; 17' zugeordnet. Eine vierte vorhandene Zulaufbohrung sowie eine vierte vorhandene Abgangsbohrung ist in den Figuren 6 bis 10 nicht zu sehen. Diese vierte Zulauf- bzw. Abgangsbohrung mündet ebenfalls an der dem Zahnrad abgewandten Seite des Ventilblocks 1.1 bzw. 1.2 und verläuft parallel zu der Zulaufbohrung 15' bzw. Abgangsbohrung 17' (vgl. Fig. 9).

Der Ventilblock 1.1 weist somit ein Bohrungspaar zum Anschluss einer Warmwasserleitung und einer Kaltwasserleitung auf. Die Längsmittelachsen dieser beiden Bohrungen verlaufen im Wesentlichen parallel zur Längsmittelachse des im Ventilblock aufgenommenen Ventilkörpers. Der Ventilblock 1.1 beinhaltet zudem ein weiteres Bohrungspaar für den Anschluss der Warmwasser- und der Kaltwasserleitung, dessen Bohrungen 15, 16 an der dem zweiten Ventilblock 1.2 abgewandten Seite des Ventilblockes 1.1 münden (vgl. Fig. 6). Die Längsmittelachsen der beiden Bohrungen 15, 16 verlaufen quer zur Längsmittelachse (Drehachse) des Ventilkörpers 7.1. Je eine Bohrung des einen Bohrungspaares kommuniziert dabei mit einer der Bohrungen des anderen Bohrungspaares. Der Ventilblock 1.1 ermöglicht somit wahlweise einen horizontalen oder vertikalen Anschluss der Warmwasser- und der Kaltwasserleitung. Die für den Anschluss der Warmwasser- und der Kaltwasserleitung nicht genutzten Bohrungen werden durch Stopfen (nicht gezeigt) flüssigkeitsdicht verschlossen.

Die Bohrungen 7.3, 7.4 des Ventilkörpers 7.1 sind gegenüber den zu ihm hinführenden Bohrungen des Ventilblocks 1.1 so angeordnet, dass bei einer vollständigen Überdeckung einer der beiden Bohrungen 7.3, 7.4 des Ventilkörpers 7.1 mit einer der beiden zu ihm hinführenden Bohrungen des Ventilblocks 1.1 die andere Bohrung des Ventilkörpers 7.1 keine Überdeckung mit der anderen Bohrung des Ventilblocks 1.1 hat, und dass bei einer Verringerung der Überdeckung der miteinander kommunizierenden Bohrungen eine Überdeckung der anderen Bohrung des Ventilkörpers 7.1 mit der anderen Bohrung des Ventilblocks 1.1 einsetzt bzw. entsprechend zunimmt. Entsprechendes gilt für den Ventilblock 1.2 und den darin eingesetzten Ventilkörper 7.2.

Hierzu sind die beiden Bohrungen 7.3, 7.4 des Ventilkörpers 7.1 beispielsweise so angeordnet, dass ihre parallel zueinander verlaufenden Längsmittelachsen einen gemeinsamen Teilkreis schneiden, dessen Mittelpunkt auf der Drehachse des Ventilkörpers 7.1 liegt, wobei der Bogenabstand der Schnittpunkte der Längsmittelachsen mit dem Teilkreis die Hälfte des Teilkreisumfangs beträgt (siehe Figuren 4 und 5). Die zu den Bohrungen des Ventilkörpers 7.1, 7.2 hinführenden Bohrungen des Ventilblocks 1.1 bzw. 1.2 sind dabei so angeordnet, dass ihre parallel zueinander verlaufenden Längsmittelachsen ebenfalls einen gemeinsamen Teilkreis schneiden, dessen Mittelpunkt wiederum auf der Drehachse des Ventilkörpers 7.1, 7.2 liegt und dessen Durchmesser dem Durchmesser des erstgenannten Teilkreises entspricht. Die beiden Bohrungen des Ventilblocks 1.1 bzw. 1.2, die mit den Bohrungen des Ventilskörpers 7.1, 7.2 in Überdeckung bringbar sind und jeweils den gleichen Durchmesser aufweisen, liegen auf dem besagten Teilkreis jedoch nicht diametral gegenüber, sondern ihr Bogenabstand auf dem Teilkreis ist um das Bogenmaß verkürzt, welches der jeweilige Bohrungsdurchmesser auf dem Teilkreis begrenzt.

Der durch die Bohrungen 7.3, 7.4 des Ventilkörpers 7.1 definierte Strömungsquerschnitt bleibt somit innerhalb des Verstellbereiches, in welchem eine Überdeckung mindestens einer der im Ventilblock 1.1, 1.2 ausgebildeten Bohrungen (Eingänge bzw. Abgänge) mit mindestens einer der Bohrungen 7.3, 7.4 des Ventilkörpers 7.1 vorliegt, in Summe annähernd konstant.

Die nicht dargestellte Steuerung der Armatur 1' entspricht der zuvor unter Bezugnahme auf die Armatur 1 beschriebenen elektronischen Steuerung.

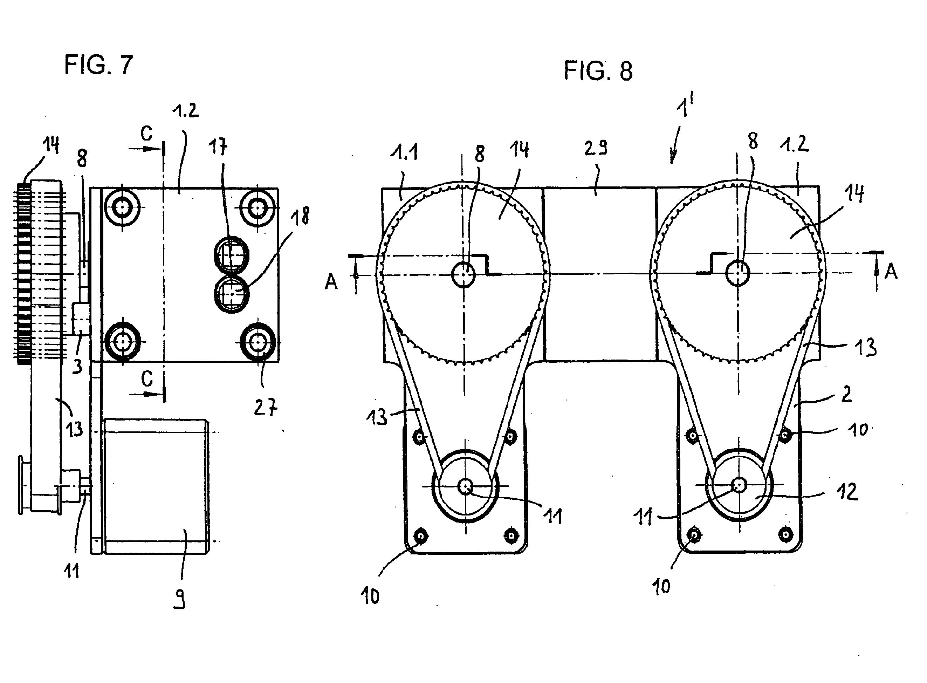

Die Ausführung der Erfindung ist nicht auf die vorstehend beschriebenen Ausführungsbeispiele beschränkt. Vielmehr sind zahlreiche Varianten denkbar, die auch bei abweichender Gestaltung von der in den beiliegenden Ansprüchen angegebenen Erfindung Gebrauch machen. So kann beispielsweise die die Ventilblöcke 1.1, 1.2 und die Stellmotoren 9 verbindende Halterung 2 gemäß Fig. 1 auch mehrteilig ausgeführt werden. Des Weiteren können die Ventilblöcke 1.1, 1.2 gemäß den Figuren 1 bis 5 auch über ein Abstandselement 29 gemäß den Figuren 8 bis 10 miteinander verbunden werden.

## Patentansprüche

1. Armatur (1, 1') zur Mischung von kaltem und warmem Wasser, insbesondere für einen Waschtisch, eine Badewanne oder Dusche, umfassend
einen ersten Ventilblock (1.1) mit einem Ventilkörper (7.1) zur Mischung von kaltem Wasser und warmem Wasser,
einen zweiten Ventilblock (1.2) mit einem Ventilkörper (7.2) zur Einstellung eines Wasservolumenstroms,
ein erstes elektrisches Stellglied (9) zur Positionierung des Ventilkörpers (7.1) des ersten Ventilblocks (1.1),
ein zweites elektrisches Stellglied (9) zur Positionierung des Ventilkörpers (7.2) des zweiten Ventilblocks (1.2), einen Temperatursensor (25) zur Erfassung einer Wasser- oder Mischwassertemperatur, und
eine elektronische Steuerung, die das erste elektrische Stellglied (9) in Abhängigkeit der mittels des Temperatursensors (25) erfassten Wasser- oder Mischwassertemperatur und eines vorgebbaren Temperaturwertes ansteuert und die das zweite elektrische Stellglied (9) in Abhängigkeit eines vorgebbaren Wasservolumenstroms ansteuert, wobei die Ventilkörper (7.1, 7.2) unabhängig voneinander positionierbar sind,
**dadurch gekennzeichnet, dass** zwischen den beiden Ventilblöcken (1.1, 1.2) ein Verbindungskanal (20) angeordnet ist, der mit einem Durchflussmengenmesser (21) versehen ist, wobei der Verbindungskanal (20) durch ein Rohrstück (22) gebildet ist und die beiden Ventilblöcke (1.1, 1.2) jeweils eine stufenförmig ausgebildete Bohrung (23) aufweisen, in
welche das Rohrstück (22) eingesteckt ist, und wobei die Ventilkörper (7.1, 7.2) als Drehventilkörper ausgebildet sind und jeweils zwei im Wesentlichen parallel zueinander verlaufende Bohrungen (7.3, 7.4, 7.5, 7.6) aufweisen, die im Wesentlichen parallel zur Drehachse des jeweiligen Drehventilkörpers verlaufen und in einen quer zur Drehachse verlaufenden Abgangskanal (7.7) des Ventilkörpers (7.1, 7.2) münden.

2. Armatur nach Anspruch 1,
**dadurch gekennzeichnet, dass** der zweite Ventilblock (1.2) mindestens zwei Wasserabgänge (4, 5) zum Anschluss unterschiedlicher Wasserentnahmestellen, insbesondere einer Wanneneinlaufarmatur und einer Handbrause aufweist und durch Verstellung des zugehörigen Ventilkörpers (7.2) eine wahlweise Wasserabgabe über den einen Wasserabgang (4) oder den anderen Wasserabgang (5) ermöglicht.

3. Armatur nach Anspruch 1 oder 2,
**dadurch gekennzeichnet, dass** der jeweilige Ventilkörper (7.1, 7.2) mit einem Sensor zur Erfassung seiner Position in Bezug auf den ihn umgebenden Ventilblock (1.1, 1.2) versehen ist.

4. Armatur nach einem der Ansprüche 1 bis 3,
**dadurch gekennzeichnet, dass** das dem jeweiligen Ventilblock (1.1, 1.2) zugeordnete elektrische Stellglieder (9) über eine Halterung (2) mit dem jeweiligen Ventilblock (1.1, 1.2) verbunden ist.

5. Armatur nach einem der Ansprüche 1 bis 4,
**dadurch gekennzeichnet, dass** die elektrischen Stellglieder (9) aus Stellmotoren bestehen, wobei die Stellmotoren (9) und die Ventilkörper (7.1, 7.2) mit Zahnrädern (12, 14) versehen sind.

6. Armatur nach Anspruch 5,
**dadurch gekennzeichnet, dass** das mit dem jeweiligen Ventilkörper (7.1, 7.2) verbundene Zahnrad (14) über einen Zahnriemen (13) mit dem Zahnrad (12) des dem Ventilkörper (7.1, 7.2) zugeordneten Stellmotors (9) verbunden ist.

7. Armatur nach einem der Ansprüche 1 bis 6,
**dadurch gekennzeichnet, dass** die Ventilkörper (7.1, 7.2) aus Keramikkörpern hergestellt sind, während die Ventilblöcke (1.1, 1.2) aus Metall oder Kunststoff hergestellt sind.

8. Armatur nach einem der Ansprüche 1 bis 7,
**dadurch gekennzeichnet, dass** die elektronische Steuerung mit einer Fernbedienung zur Vorgabe einer Wassertemperatur und/oder eines Wasservolumenstromes ausgestattet ist.

9. Armatur nach einem der Ansprüche 1 bis 8,
**dadurch gekennzeichnet, dass** der Temperatursensor (25) in dem zweiten Ventilblock (1.2) angeordnet ist.

10. Armatur nach einem der Ansprüche 1 bis 9,
**dadurch gekennzeichnet, dass** der Temperatursensor (25) durch einen Wandbereich des zweiten Ventilblocks (1.2) vom fließenden Mischwasser getrennt ist.

11. Armatur nach einem der Ansprüche 1 bis 10,
dadurch gekenntzeichnet, dass der erste Ventilblock (1.1) ein Bohrungspaar zum Anschluss einer Warmwasserleitung und einer Kaltwasserleitung aufweist, wobei die Längsmittelachsen des Bohrungspaares im Wesentlichen parallel zur Längsmittelachse des in dem Ventilblock aufgenommenen Ventilkörpers (7.1) verlaufen, und ein weiteres Bohrungspaar zum Anschluss der Warmwasserleitung und der Kaltwasserleitung aufweist, wobei die Längsmittelachsen dieses weiteren Bohrungspaares quer zur Längsmittelachse des in dem Ventilblock (1.1) aufgenommenen Ventilkörpers (7.1) verlaufen.

12. Armatur nach einen der Ansprüche 1 bis 11,
**dadurch gekennzeichnet, dass** der zweite Ventilblock (1-2) ein Bohrungspaar zum Anschluss einer ersten Wasserabgangsleitung und einer zweiten Wasserabgangsleitung aufweist, wobei die Längsmittelachsen des Bohrungspaares im Wesentlichen parallel zur Längsmittelachse des in dem Ventilblock (1.2) aufgenommenen Ventilkörpers (7.2) verlaufen, und ein weiteres Bohrungspaar zum Anschluss der ersten Wasserabgangsleitung und der zweiten Wasserabgangsleitung aufweist, wobei die Längsmittelachsen dieses weiteren Bohrungspaares quer zur Längsmittelachse des in dem Ventilblock (1.2) aufgenommenen Ventilkörpers (7.2) verlaufen.

13. Armatur nach einem der Ansprüche 1 bis 12,
**dadurch gekennzeichnet, dass** die beiden Ventilblöcke (1.1, 1.2) baugleich ausgebildet sind.

## Claims

1. Fitting (1, 1') for mixing cold and hot water, in particular for a basin, a bathtub or a shower, comprising
a first valve block (1.1) having a valve body (7.1) for mixing cold water and hot water,
a second valve block (1.2) having a valve body (7.2) for adjusting a water flow volume,
a first electrical actuator (9) for positioning the valve body (7.1) of the first valve block (1.1),
a second electrical actuator (9) for positioning the valve body (7.2) of the second valve block (1.2),
a temperature sensor (25) for detecting a water temperature or mixed water temperature, and
an electronic control, which controls the first electrical actuator (9) on the basis of the water temperature or mixed water temperature detected by the temperature sensor (25) and a predeterminable temperature value, and controls the second electrical actuator (9) on the basis of a predeterminable water flow volume, it being possible to position the valve bodies (7.1, 7.2) such that they are independent of each other, **characterised in that** a connecting channel (20) is arranged between the two valve blocks (1.1, 1.2), which connecting channel is provided with a flowmeter (21), the connecting channel (20) being formed by a pipe section (22) and the two valve blocks (1.1, 1.2) each having a stepped hole (23) into which the pipe section (22) is inserted, and the valve bodies (7.1, 7.2) being formed as turning valve bodies and each comprising two holes (7.3, 7.4, 7.5, 7.6) extending substantially parallel to one another, which holes extend substantially parallel to the rotational axis of each turning valve body and open into a discharge channel (7.7), extending transverse to the rotational axis, of the valve body (7.1, 7.2).

2. Fitting according to claim 1,
**characterised in that** the second valve block (1.2) comprises at least two water discharge outlets (4, 5) for connection of different water outlet points, in particular a bathtub tap fitting and a hand shower, and enables water to be discharged from either one water discharge outlet (4) or the other water discharge outlet (5) as desired by adjusting the corresponding valve body (7.2).

3. Fitting according to either claim 1 or claim 2,
**characterised in that** each valve body (7.1, 7.2) is provided with a sensor for detecting its position with respect to the valve block (1.1, 1.2) surrounding said valve body.

4. Fitting according to any of claims 1 to 3,
**characterised in that** the electrical actuator (9) assigned to each valve block (1.1,1.2) is connected to the respective valve block (1.1, 1.2) by means of a support (2).

5. Fitting according to any of claims 1 to 4,
**characterised in that** the electrical actuators (9) consist of servomotors, the servomotors (9) and the valve bodies (7.1, 7.2) being provided with gear wheels (12, 14).

6. Fitting according to claim 5,
**characterised in that** the gear wheel (14) connected to the respective valve body (7.1, 7.2) is connected to the gear wheel (12) of the servomotor (9) assigned to the valve body (7.1, 7.2) by means of a toothed drive belt (13).

7. Fitting according to any of claims 1 to 6,
**characterised in that** the valve bodies (7.1, 7.2) are made of ceramic bodies, while the valve blocks (1.1, 1.2) are made of metal or plastics material.

8. Fitting according to any of claims 1 to 7,
**characterised in that** the electronic control is provided with a remote control for specifying a water temperature and/or a water flow volume.

9. Fitting according to any of claims 1 to 8,
**characterised in that** the temperature sensor (25) is arranged in the second valve block (1.2).

10. Fitting according to any of claims 1 to 9,
**characterised in that** the temperature sensor (25) is separated from the flowing mixed water by a wall region of the second valve block (1.2).

11. Fitting according to any of claims 1 to 10,
**characterised in that** the first valve block (1.1) comprises a pair of holes for connecting a hot water pipe and a cold water pipe, the central longitudinal axes of the pair of holes extending substantially parallel to the central longitudinal axis of the valve body (7.1) received in the valve block, and comprises an additional pair of holes for connecting the hot water pipe and the cold water pipe, the central longitudinal axes of said additional pair of holes extending transverse to the central longitudinal axis of the valve body (7.1) received in the valve block (1.1).

12. Fitting according to any of claims 1 to 11,
**characterised in that** the second valve block (1.2) comprises a pair of holes for connecting a first water discharge pipe and a second water discharge pipe, the central longitudinal axes of the pair of holes extending substantially parallel to the central longitudinal axis of the valve body (7.2) received in the valve block (1.2), and comprises an additional pair of holes for connecting the first water discharge pipe and the second water discharge pipe, the central longitudinal axes of said additional pair of holes extending transverse to the central longitudinal axis of the valve body (7.2) received in the valve block (1.2).

13. Fitting according to any of claims 1 to 12,
**characterised in that** the two valve blocks (1.1, 1.2) are identical in construction.

## Revendications

1. Armature (1, 1') destinée au mélange d'eau froide et d'eau chaude, en particulier pour une table lavabo, une baignoire ou une douche, comprenant
- un premier bloc de vanne (1.1) avec un corps de vanne (7.1) pour le mélange d'eau froide et d'eau chaude,
- un deuxième bloc de vanne (1.2) avec un corps de vanne (7.2) pour le réglage d'un flux volumique d'eau,
- un premier organe de réglage électrique (9) pour le positionnement du corps de vanne (7.1) du premier bloc de vanne (1.1),
- un deuxième organe de réglage électrique (9) pour le positionnement du corps de vanne (7.2) du deuxième bloc de vanne (1.2)
- un capteur de température (25) pour la détermination d'une température d'eau ou de mélange d'eau, et
- une commande électronique pour la commande du premier organe de réglage électrique (9) en fonction de la température d'eau ou de mélange d'eau, détectée par le capteur de température (25), et d'une valeur de température pouvant être prédéterminée, ainsi que pour la commande du deuxième organe de réglage électrique (9) en fonction d'un débit d'eau pouvant être prédéterminé, sachant que les corps de vanne (7.1, 7.2) peuvent être positionnés indépendamment l'un de l'autre,
**caractérisée en ce que**, entre les deux blocs de vanne (1.1, 1.2), est agencé un canal de liaison (20) qui est pourvu d'un débitmètre (21), sachant que le canal de liaison (20) est formé par une pièce tubulaire (22) et que les deux blocs de vanne (1.1, 1.2) sont dotés chacun d'un alésage (23) en forme de gradin, dans lequel la pièce tubulaire (22) est insérée, et sachant que les corps de vanne (7.1, 7.2) sont réalisés sous la forme de corps de vanne rotatifs et sont dotés chacun de deux alésages (7.3, 7.4, 7.5, 7.6) sensiblement parallèles l'un à l'autre, qui s'étendent sensiblement parallèlement à l'axe de rotation du corps de vanne rotatif respectif et débouchent dans un canal de sortie (7.7) du corps de vanne (7.1, 7.2) qui s'étend transversalement par rapport à l'axe de rotation.

2. Armature selon la revendication 1,
**caractérisée en ce que** le deuxième bloc de vanne (1.2) est doté d'au moins deux sorties d'eau (4, 5) pour le raccordement de différentes prises d'eau, en particulier d'une robinetterie d'arrivée d'eau pour une baignoire et pour une pomme de douche à main, et permet, par réglage du corps de vanne (7.2) associé, une sortie d'eau par l'une (4) des sorties d'eau ou par l'autre (5), selon le choix.

3. Armature selon la revendication 2,
**caractérisée en ce que** chaque corps de vanne (7.1, 7.2) est doté d'un détecteur pour détecter sa position par rapport au bloc de vanne (1.1, 1.2) qui l'enceint.

4. Armature selon l'une des revendications 1 à 3,
**caractérisée en ce que** l'organe de réglage électrique (9), associé au bloc de vanne (1.1, 1.2) respectif, est relié audit bloc de vanne (1.1, 1.2) respectif par l'intermédiaire d'un support (2).

5. Armature selon l'une des revendications 1 à 4,
**caractérisée en ce que** les organes de réglage électriques (9) consistent en servomoteurs, sachant que les servomoteurs (9) et les corps de vanne (7.1, 7.2) sont pourvus de roues dentées (12, 14).

6. Armature selon la revendication 5,
**caractérisée en ce que** la roue dentée (14), reliée au corps de vanne (7.1, 7.2) respectif, est reliée au moyen d'une courroie dentée (13) à la roue dentée (12) du servomoteur (9) associé au corps de vanne (7.1, 7.2) respectif.

7. Armature selon l'une des revendications 1 à 6,
**caractérisée en ce que** les corps de vanne (7.1, 7.2) sont fabriqués en céramique tandis que les blocs de vanne (1.1, 1.2) sont fabriqués en métal ou en matière synthétique.

8. Armature selon l'une des revendications 1 à 7,
**caractérisée en ce que** la commande électronique est équipée d'une télécommande pour la prédétermination d'une température d'eau et / ou d'un débit d'eau.

9. Armature selon l'une des revendications 1 à 8,
**caractérisée en ce que** le capteur de température (25) est installé dans le deuxième bloc de vanne (1.2).

10. Armature selon l'une des revendications 1 à 9,
**caractérisée en ce que** le capteur de température (25) est séparé du mélange d'eau courant par une section de paroi du deuxième bloc de vanne (1.2).

11. Armature selon l'une des revendications 1 à 10,
**caractérisée en ce que** le premier bloc de vanne (1.1) est doté d'une paire d'alésages pour le raccordement d'une conduite d'eau chaude et d'une conduite d'eau froide, sachant que les axes médians, longitudinaux de la paire d'alésages sont sensiblement parallèles à l'axe médian, longitudinal du corps de vanne (7.1) logé dans le bloc de vanne, ainsi que d'une autre paire d'alésages pour le raccordement de la conduite d'eau chaude et de la conduite d'eau froide, sachant que les axes médians, longitudinaux de cette autre paire d'alésages s'étendent transversalement par rapport à l'axe médian, longitudinal du corps de vanne (7.1) logé dans le bloc de vanne (1.1).

12. Armature selon l'une des revendications 1 à 11,
**caractérisée en ce que** le deuxième bloc de vanne (1.2) est doté d'une paire d'alésages pour le raccordement d'une première conduite de sortie d'eau et d'une deuxième conduite de sortie d'eau, sachant que les axes médians, longitudinaux de la paire d'alésages sont sensiblement parallèles à l'axe médian, longitudinal du corps de vanne (7.2) logé dans le bloc de vanne (1.2), ainsi que d'une autre paire d'alésages pour le raccordement de la première conduite de sortie d'eau et de la deuxième conduite de sortie d'eau, sachant que les axes médians, longitudinaux de cette autre paire d'alésages s'étendent transversalement par rapport à l'axe médian, longitudinal du corps de vanne (7.2) logé dans le bloc de vanne (1.2).

13. Armature selon l'une des revendications 1 à 12,
**caractérisée en ce que** les deux bloc de vanne (1.1, 1.2) sont de construction identique.
